Europäisches Patentamt

European Patent Office

Office européen des brevets

(19)

(11) **EP 1 286 586 B1**

(12) **EUROPEAN PATENT SPECIFICATION**

(45) Date of publication and mention
of the grant of the patent:
**29.12.2004 Bulletin 2004/53**

(51) Int Cl.7: **A01N 1/00**, A01N 3/00,
A23B 7/04, A23L 3/36,
F25D 31/00

(21) Application number: **01936662.4**

(22) Date of filing: **07.06.2001**

(86) International application number:
**PCT/GB2001/002505**

(87) International publication number:
**WO 2001/093675 (13.12.2001 Gazette 2001/50)**

(54) **METHODS AND APPARATUS FOR FREEZING TISSUE**

VERFAHREN UND VORRICHTUNG ZUM EINFRIEREN VON GEWEBE

PROCEDE ET APPAREIL POUR CONGELER UN TISSU

(84) Designated Contracting States:
**AT BE CH CY DE DK ES FI FR GB GR IE IT LI LU
MC NL PT SE TR**

(30) Priority: **07.06.2000 GB 0013714**

(43) Date of publication of application:
**05.03.2003 Bulletin 2003/10**

(73) Proprietor: **Asymptote Limited
Cambridge CB4 4WS (GB)**

(72) Inventors:
• **MORRIS, George, John
Bourn, Cambridge CB5 7SX (GB)**
• **ACTON, Elizabeth
Cambridge CB3 0DF (GB)**

(74) Representative: **Hedges, Martin Nicholas et al
A.A. Thornton & Co.
235 High Holborn
London WC1V 7LE (GB)**

(56) References cited:
**WO-A-91/01635          WO-A-93/14652
WO-A-99/20104          US-A- 4 117 881**

Printed by Jouve, 75001 PARIS (FR)

## Description

This invention relates to a method for freezing tissue, organs and simple multicellular structures whilst minimising cellular damage.

Tissues are structures composed of cells of the same sort performing the same function, for example animal muscle. An organ is a multicellular part of a plant or animal which forms a structural and functional unit, e.g. whole fruit, many vegetables, animal heart, liver etc. The present invention relates specifically to the freezing of tissues, organs and simple multicellular structures in which cell integrity and, where appropriate, biological activity exist before freezing. Examples of simple multicellular structures include early developmental stages of insects, fish and crustacea etc

The invention relates in particular to:

a) the freezing of cellular foodstuffs which are generally consumed thawed either cooked or uncooked, i.e. consumer products generally recognised as "frozen foods" including fruit, vegetables, meat, fish, crustacea.

b) the freezing of plant tissues for purposes other than food including, for example, the preservation of horticultural products, e.g. plantlets for transplantation, flowers and other decorative materials.

c) the cryopreservation of tissues and organs for medical and veterinary transplantation.

d) the cryopreservation of developmental stages of insects, including Drosophila, Medfly etc for use in biotechnology and agriculture, larval stages of bivalves and fish for use in aquaculture and environmental testing, and feed organisms for use in aquaculture.

The effects of freezing on tissues and organs for transplantation or for non-food applications may be modified by the addition of so called cryoprotective additives. These are generally permeable, non-toxic compounds which modify the physical stresses cells are exposed to during freezing. These compounds may be introduced into the tissues and organs either by immersion of the tissue or organ into an appropriate medium or in the case of vascular organs by perfusion. It is generally considered unacceptable to use such cryoprotective additives with foodstuffs.

The biological cells within tissues contain liquid compartments which are freezeable and comprise aqueous solutions. Following ice nucleation and crystal growth in an aqueous solution, water is removed from the system as ice, and the concentration of the residual unfrozen solution increases. As the temperature is lowered, more ice forms, decreasing the residual non-frozen fraction which further increases in concentration. In aqueous solutions, there exists a large temperature range in which ice co-exists with a concentrated aqueous solution: this is often referred to as the "mushy zone".

Following ice nucleation in a bulk supercooled aqueous solution the temperature initially increases and remains more or less constant at the melting temperature of the solution, providing what is commonly referred to as the "latent heat" plateau. Similar temperature plots are observed during the freezing of all systems where the aqueous compartment is a continuous phase, for example suspensions, gels, oil in water emulsions and sponges. In such systems, ice nucleation invariably occurs at the surface being cooled, and crystal growth proceeds into the unfrozen material.

The freezing behaviour of cell suspensions has been extensively investigated. In cell suspensions, a large extracellular compartment occurs as a continuous phase and it is the freezing processes which occur within the extracellular compartment which determine cellular behaviour. Following ice formation, cells partition into the residual unfrozen phase where they are exposed to the effects of increasingly hypertonic solutions. At "slow" rates of cooling, there is sufficient time for the intracellular environment to remain in equilibrium with the extracellular compartment by the osmotic loss of water from the cells. As the rate of cooling increases, there is less time for osmotic equilibrium to be maintained and the cells become increasingly supercooled and the probability of intracellular ice formation increases. It is generally recognised that the formation of intracellular ice is lethal to a cell. Cell survival following cryopreservation of cell suspensions is associated with dehydration of cells and the avoidance of intracellular ice formation.

In tissues, there is a small extracellular compartment which exists as a continuous liquid phase. The majority of water within tissues exists within the individual cells which may be considered to be non-continuous phase and, even during "slow" cooling of tissues, intracellular ice formation is inevitable. The manner by which the various factors lead to damage during freezing, which is then expressed as cell death or unacceptable product quality on thawing, is not understood for tissues. It is a widespread belief that "Rapid cooling will result in the proliferation of nucleation, which leads to an increase in the number of ice crystals formed and a concomitant decrease in their size. Slow cooling results in fewer ice crystals, which grow to a larger size as cooling continues. The former is preferred because less damage is done to the plant tissues if ice crystals remain small, whereas large ice crystals will disrupt plant cells. The more rapid the freezing process, the better the texture and flavour quality" (D. Arthey, In Frozen Food Technology, Blackie, London 1993 pp 252).

Whilst the approach of freezing sensitive materials as rapidly as possible is widely employed, the lack of success can be judged by the absence of high quality, commercially available, material of frozen sensitive products. Examples include many fruits such as strawberries, melons, mangos etc., vegetables such as potatoes, asparagus etc. fish, crustacea, meats etc. Freezing damage to these various materials is manifest in a variety of undesirable features. With sensitive fruit and vegetables extensive disruption occurs at the cellular level and thawed material demonstrates a loss of turgor (bite), discoloration, development of off-tastes, drip loss etc. With foods derived from animal and fish muscle, i.e. meat and fish, a toughening may also be apparent on thawing.

Computer modelling of the freezing behaviour in tissues has generally assumed that the water phase of the tissue is continuous and that a simple ice front propagates through the tissue. Freezing behaviour is assumed to be similar to that observed in a bulk liquid or gel etc. and is described by a "mushy zone" model (see Reid, D.S. *In* Frozen Food Technology, Blackie, London 1993 pp 1-19, Cleland A.C. *In* Food Refrigeration Processes, Analysis, Design and Simulation, Elsvier Applied Science, London, 1990). This has been further refined to suggest that, to improve product quality, the time spent by tissue in the mushy zone should be minimised, but this is essentially a re-statement of the 'faster is better' approach. The mushy zone concept is one which we have not found to be entirely appropriate and, importantly, it is not predictive.

In particular, we have found that when cellular tissue (in which the cells are largely intact) is frozen, individual cells freeze independently of each other and it is the "pattern" of this nucleation behaviour which largely determines cell integrity upon thawing. The "pattern" includes the temperature of nucleation, the extent of undercooling (difference between the environment temperature and the temperature of ice nucleation), distribution of nucleation temperatures etc. Thus, we have observed the freezing process within apple tissue on the stage of a light cryomicroscope. At a relatively high temperature, typically -3°C, an ice front of ice is observed to propagate through the film of extracellular fluid. As the temperature is reduced, the cells remain supercooled, and when intracellular ice nucleation occurs individual cells within a tissue are observed to nucleate independently of each other. To complete nucleation in all cells of the tissue, relatively long periods may be required. If the tissue is thawed out and heated to destroy cell integrity, and is then refrozen, a wave of ice formation occurs in the freeze damaged tissue and independent cell freezing is not observed. Also, in tissue from very ripe fruit in which significant autolysis has occurred a similar wave of ice propagation occurs. From this it can be seen that:

1. It is not accurate to model the freezing behaviour of tissue by assuming mushy zone behaviour. This method of analysis, which has been widely employed in the past, strictly only applies to tissues in which cell compartmentalisation has been lost either by damage (blanching, freezing) or by autolysis.

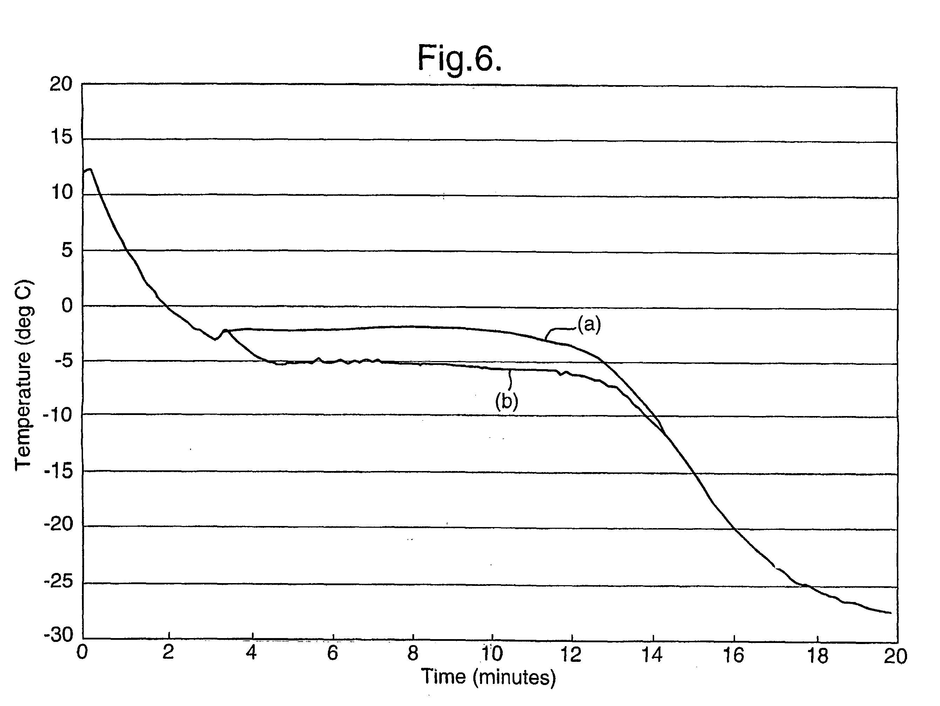

2. Temperature measurements within tissues are consistent with ice nucleation occurring independently within cells in the tissue. A "false latent heat plateau" is observed at a lower temperature than the latent heat plateau for the homogenised material. In Figure 6 of the accompanying drawings, this is shown for direct temperature measurements with apple. The latent heat plateau (a) for homogenised apple tissue, the "real" latent heat plateau of the aqueous solution, is at a higher temperature than the "false latent heat pleateau" (b). This is due to a balance of some cells nucleating and liberating their "package" of latent heat co-existing with supercooled cells. This result is unexpected and could not be predicted by standard mushy zone modelling.

3. The temperature of cells remains more or less at the temperature of the "false latent heat plateau" temperature until all cells have nucleated, and then the bulk temperature may reduce.

4. The cells of tissues contain intracellular organelles, and many of these; e.g. mitochondria and vacuoles, are membrane bound and react osmotically to changes in the concentration of their intracellular environment. Following intracellular ice nucleation, the concentration of the intracellular compartment will increase and the organelles will become exposed to hypertonic conditions. If intracellular nucleation occurs at a high sub-zero temperature, conditions allow the osmotic shrinkage of the intracellular organelles to occur and ice formation may occur within a partially shrunken organelle or they become sufficiently dehydrated to inhibit the formation of intra-organelle ice. Intracellular nucleation at low sub-zero temperatures will lead to conditions where there is insufficient time for intra-organelle dehydration to occur and ice will nucleate within fully hydrated organelles. In plant tissue it is the response of the vacuole to shrinkage and osmotic stress which will largely determine whether subsequent cell damage occurs.

We have found that, in any tissue, the external conditions determine the nucleation behaviour of individual cells and the characteristics of the "false latent heat plateau", and that an "optimum" set of conditions exists for any tissue. Different tissues have different optimum external heat flux conditions to minimise cell damage, and this is due to differences in cell size, intracellular nucleation characteristics of materials, the size and distribution of vacuoles, intracellular solute content and the size and water permeability of the various intracellular organelles. Furthermore, the "optimum" may be characterised as being the set of external conditions which results in a pattern of intracellular nucleation which neither causes damaging intra-organelle ice to form nor leads to a excessive dehydration induced injury to the organelles in the majority of cells within a tissue.

By freezing a tissue under these conditions, we have found the cell damage can be reliably reduced, on thawing minimal damage to the vacuoles occurs and the plasmalemma retains its selective permeability. If such tissue is refrozen under the same conditions, substantially the same false latent heat plateau is obtained.

In one aspect the invention provides a method of freezing material, which is tissue, an organ or a simple multicellular structure, to minimise cellular damage on thawing, which method comprises the steps of selecting the heat flux parameter with which the material is to be frozen and cooling the material with said heat flux parameter; characterised in that, said heat flux parameter is selected with reference to first and second latent heat temperature plateaus associated with the material and so as to minimise the difference between said plateaus, wherein the first latent heat temperature plateau is that associated with the material before the material is frozen with said heat flux parameter and the second latent heat temperature plateau is that associated with the material after the material has been frozen with said heat flux parameter and subsequently thawed. The heat flux parameter may be selected so as to minimise the difference between the temperatures at which the first and second latent heat temperature plateaus occur.

An apparatus for freezing cellular tissue to minimise cellular damage on thawing comprises a chamber for receiving the tissue to be frozen, means of providing a stream of coolant gas in the chamber to contact the tissue, means of sensing the heat flux parameter in the chamber, and being characterised by means for controlling the cooling gas to maintain the heat flux parameter substantially constant. Such an apparatus is described e.g. in WO93/14652.

In the method of the present invention, the heat flux parameter is monitored during the freezing, and the conditions are modified as necessary to maintain the parameter substantially constant at the chosen value. The heat flux parameter may be inferred from knowledge of the local stream temperature, or it can be measured directly using a heat flux parameter meter.

Convective heat transfer occurs between a fluid in motion at a environment temperature $T_e$ and any body at temperature $T \neq T_e$. The local heat flux $q''$ is given by $q''=h \cdot A(T-T_e)$, where $A$ is the surface area of the body, and $h$ is the local heat transfer coefficient, in $Wm^{-2}K^{-1}$. Applications dealing with convection often involve complex fluid mechanics, and hence are difficult to model theoretically. This is particularly true for conditions involving turbulent flow. It is therefore important to be able to measure the heat flux, or in some circumstances the convective heat transfer coefficient $h$.

A further important related parameter is the "heat flux parameter" $HF$ is defined by the result of the arithmetic product of the local heat transfer $h$, in $Wm^{-2}K^{-1}$, and the value below zero degree Celsius of the local stream temperature $T_e$ measured in degrees Celsius, For example, with a local heat transfer coefficient of 50 $Wm^{-2}K^{-1}$, in a stream temperature of -50°C, the heat flux parameter will be 2500 $Wm^{-2}$. The "heat flux parameter" is a simple characterisation of the heat transfer properties of a coolant fluid (gas or liquid) used for freezing purposes. Furthermore the heat flux parameter of a body, $HF=-h \cdot T_e$, as defined above, is also given by $HF=q''/A$ if the temperature of the surface of the body is 0°C. Monitoring the heat flux parameter is an important part of controlling freezing.

An indirect method to measure this parameter is to measure $h$ and $T_e$ separately. The temperature can be readily measured using any standard method such as a thermocouple or a platinum resistance thermometer. The standard way of measuring $h$ is to analyse the thermal history of a simply shaped object with high ' thermal conductivity (for example a copper sphere) as it changes temperature after being placed in the environment held at constant temperature and convective heat transfer conditions. The initial temperature of this object must be sufficiently different to that of the environment in order to obtain a good accuracy. A simple so-called 'lumped heat capacity' analysis shows that the temperature history in these circumstances will be exponential:

$$T_s(t) = \Delta T_{intr} \cdot e^{-\frac{hA}{mC_p} \cdot t} + T_\infty$$

where $T_s$ is the (time dependent) temperature of the body, $T_s$ is the (constant) environment temperature and $?T_{inir}$ is the initial temperature difference between the body and the stream, $A$ is the surface area of the object, $C_p$ its thermal capacity and $m$ its mass.

However, this method is limited to constant environment temperature and constant local heat transfer during the cooling of the object. If this were not the case, using a parallel synchronised measurement of the environment temperature, it would be possible to solve the relevant conduction equations in the solid with appropriate boundary conditions using analytical or finite difference modelling and so obtain $h$, but this is impracticable for active or "instantaneous" monitoring.

An alternative method of measuring $h$, is to regularly re-heat an object and analyse the cooling curve that is measured after each re-heating. If the time interval for re-heating and cooling is short in comparison with the time periods over which the external temperature or/and heat transfer coefficient change, it is then possible to follow their variation. However, this method is difficult to use since it needs: temperature measurement of the environment, temperature measurement of the object, controlled heating of the object and complex mathematical analysis of the cooling curve. It is also unsuitable for "instantaneous" monitoring.

Instead of analysing the temperature $T_s$ of the object in response to the environment, the method presented here makes a direct measurement of the heat Q necessary to keep the temperature of the object constant. The heat required to do so is equal to the heat lost to the environment $q''$. For a known surface area of an object controlled at $0°C$, the "heat flux parameter" is then simply obtained by $HF=q''/A=Q/A$. The measurement does not depend on either the environment temperature or the local convective heat transfer coefficient being constant. For a known environment temperature, it is straightforward to deduce the value of the local heat transfer coefficient $h$.

The surface area of the object maintained at $0°C$ is not always easy to measure or calculate accurately. In this case, the device can be calibrated in a constant temperature and heat transfer coefficient environment using the cooling of a simple copper sphere according to the method previously described to obtain the effective surface area.

The heat flux meters will be located in the stream close to the product being frozen so that the heat flux parameter of the gas contacting the product can be assessed. The heat flux parameter can be varied by, for example, changing the temperature of the coolant gas, or changing the speed and/or direction of fans or jets which direct the gas towards the product. We prefer to adjust the heat flux parameter locally during operation of the method of the invention by changing the fan speed.

In the case of tissues and organs for medical, veterinary or biotcehnological application a cryoprotective additive may be incorporated before freezing. Freezing by exposure to a stream of coolant gas may then be carried with the tissue suspended in a solution of the cryoprotectant in any suitable apparatus (ampoule, vial or bag). the tissue or organ, following equilibration with the cryoprotectant may then be removed from the cryoprotectant solution, surface dried and then frozen by direct exposure to a stream of coolant gas. In addition, the temperature of the tissue or organ may also be reduced by immersion into a refrigerated bath or by perfusion of refrigerant.

The determination of the optimum heat flux parameter for freezing any particular product can be made in a number of ways including (a) empirically: a series of samples of the product can be subjected to freezing using various conditions, and a latent heat temperature curve plotted for each. Then after thawing the samples can be refrozen under the same external conditions, and a second latent heat temperature curve plotted. If the conditions are optimum or close to optimum, the two curves will be the same with the plateau at substantially the same temperature. When other conditions are used, the second curve will have a plateau at a higher temperature than the first curve, (b) From computer modelling of the process: it is necessary to describe the process of intracellular nucleation within tissues as a function of external conditions and to couple this with a further description of the osmotic behaviour of the various intracellular organelles. (c) From analysis of the cellular ultrastructure following various freezing conditions, it is possible to determine the localisation of ice within the cell, in particular the occurrence of intra-vacuolar ice may be determined.

With fruits and vegetables, cellular metabolism continues after cropping and leads to post harvest deterioration. The reduction in product quality may be minimised by lowering the temperature of storage or by modifying the packaging atmosphere. In addition, there are many attempts to specifically inhibit the post-harvest deterioration by classical breeding programmes and more recently by genetic modification.

The post harvest deterioration of many tropical and sub-tropical fruits is extreme, examples include mango, pawpaw etc. In climates with. little or no seasonal change in temperature, seed production is primarily a mechanism of dispersal, seeds germinate rapidly on contact with the ground and are not required to be dormant over-wintering structures. These fruits are genetically programmed to rot and a very high respiration rate and mitochondrial activity is associated with this. The commercial exploitation of such fruits poses a number of problems, particularly the use of prepared fruit in fruit salads, or prepared meals where it is found that such fruit rapidly deteriorates becoming unpleasantly soft within a short period. The shelf life of such products may be increased by chilling or packing within an oxygen depleted atmosphere, both treatments would be expected to reduce cellular metabolism and in particular mitochondrial activity.

Following freezing and thawing by traditional methods damage to the mitochondrial system is evident. A "burst" or prolonged increase in respiration usually occurs and when this has been examined it has been attributed to a general breakdown in cellular compartmentalisation.

We have found a way of increasing a product shelf life which consists of freezing the fruit, either whole or prepared, such that when thawed no functional damage occurs to the cellular membranes, in particular the plasmalemma and vacuolar membranes, whilst damage to mitochondrial activity is achieved. The freezing conditions are selected such that intracellular ice nucleates at a temperature which results in inactivation or fragmentation of the mitochondria, whilst allowing osmotic dehydration of other organelles, in particular the vacuoles. On thawing cell integrity is retained but respiration is abolished and the shelf life of such material is extended compared with fresh material.

There is also a requirement, for both food hygiene and quality reasons, to know whether food products, and particularly meat and fish, have been previously frozen. No simple method currently exists to determine whether refreezing has occurred. However, in accordance with an aspect of the present invention, this can be reliably effected by examining the temperature of the freezing exotherm to see whether tissue integrity has been destroyed by a previous freeze thaw cycle. Using direct thermocouple measurements, thermal analysis (differential scanning calorimetry, differential thermal analysis etc.). the temperature of the tissue during a freezing cycle can be measured against that occurring following thawing and re-freeze. It may be preferred to heat the tissue to, say 50°C to ensure that all tissue structure is destroyed before freezing, however care must be taken that water is not lost by evaporation. Alternatively, the cellular ultrastructure could be destroyed by homogenisation and the freezing process in the native "cellular" material could be compared against that of the homogenised material.

One simple way of measuring the "heat flux parameter" *HF* consists of using a device controlling the temperature given by a type T thermocouple inserted in the heat sink of a specific "high heat dissipation" resistance R. The controller regulates the electrical current I, in amperes, passing through the known resistance R. The electrical power $I^2R$ is then equal to the heating of the object. It is adjusted for the area A of the resistance, and displayed and/or logged to give a direct measurement of HF.

A "sensorless temperature controller" can be used to maintain the body at a pre-determined temperature, a single resistance being used as both the heater element and the temperature sensor.

A probe comprising an HF measurement device is used to place the device at a position at which an HF measurement is needed. The probe is advantageously a Resistance Temperature Dependent (RTD) element and may be controlled to a "sensorless temperature controller", using the RTD element to successively measure the temperature and to heat the probe. The temperature controller is set to keep the resistance of the RTD element of the probe at the desired value, corresponding to the temperature the probe needs to be controlled at. The value of the heat flux is calculated knowing the electrical power delivered and the surface area of the probe. For instance, it may be obtained by measuring the average voltage and current in the circuit of the probe. This RTD element may be connected in series with a resistance $R_p$ to facilitate the measurement of the voltage and the current.

In order that the invention may be more fully understood, reference is made to the accompanying drawings, wherein:

> Figure 1 is an example of a connection diagram for a probe with a temperature controller;
> Figure 2 is an example of a design for the probe to be held in a stream of gas;
> Figure 3 shows a typical voltage waveform measured across the resistance $R_p$ of Figure 1;
> Figure 4 is a longitudinal sectional schematic view of one example of a cooling tunnel for carrying out the method of the invention; and
> Figure 5 is a cross-section on line x-x of Figure 4.

In one preferred way of carrying out the method of the present invention, the heat flux parameter of a stream of cold gas (temperature lower than 0°C) is determined by maintaining the probe at 0°C and measuring the power given to the probe. The "sensorless temperature controller", for example a MINCO Heaterstat is used in this application but other devices could be used, is adjusted to control the resistance of the circuit at ($R_p+100+R_{cables}$), 100 ohms being the resistance of the PT100 at 0°C, and $R_{cables}$ is used to compensate the eventual resistance of the cabling between the Heaterstat and the PT100 itself.

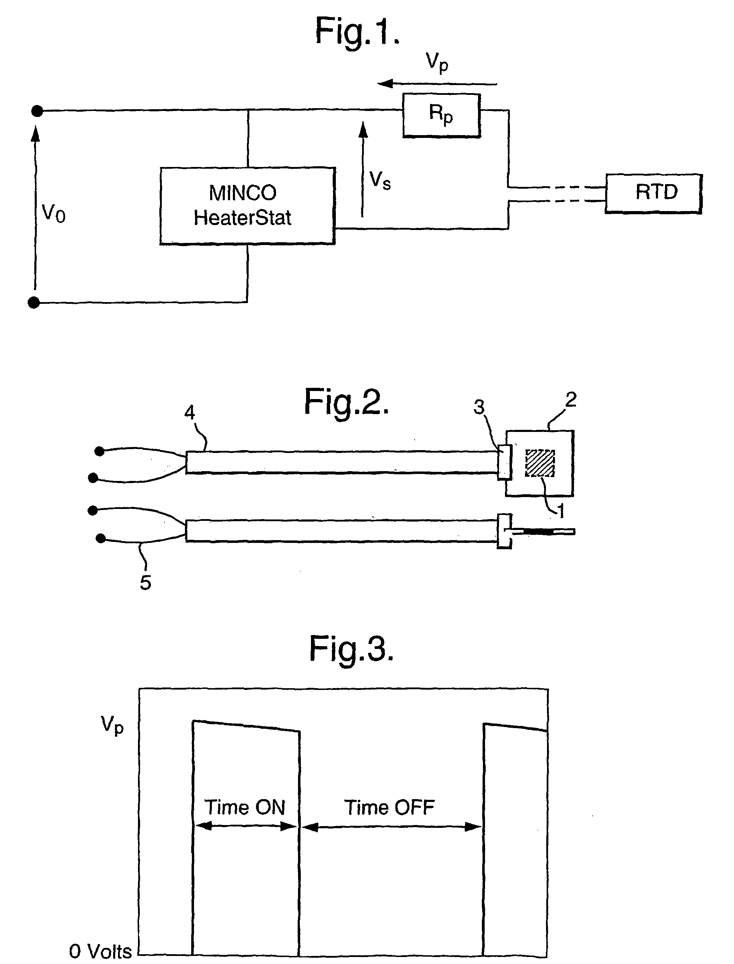

As shown on Figure 2, the platinum resistance RTD element (1) is inserted between two layers of copper foil (2) soldered together. This is fixed at the end of a pipe (4) using a nylon screw (3) and araldite resin to minimise the heat losses through the pipe. The probe is connected to the circuit using the connection (5).

The value of the heat flux is obtained by measuring the voltage across the resistance $R_p$ and determining the percentage of time the Heaterstat is ON. The voltage across the resistance $R_p$ can also be used to check the temperature of the probe.

The relationship between the measure voltage $V_p$ across the resistance $R_p$, and the resistance of the RTD element (thus its temperature) is as follow.

$$V_p = V_0 \cdot \frac{R_p}{(R_p + R_{RTD} + R_{cables})}$$

By measuring $V_p$, it is possible to adjust the set-point of the Heaterstat at the desired value or to know the temperature of the probe. By changing $R_p$, it is possible to choose the output value $V_p$ to be adjusted as desired. For instance, using a supply voltage of 24 Volts, the resistance $R_p$ should be set at 6.3 ohms and the set-point of the Heaterstat change in order to obtain an output voltage $V_p$ of 1.4 Volts.

The observation of the voltage $V_p$ is represented on Figure 3.

By measuring the proportion of the time ($t_{on}/T$) the Heaterstat is ON, the electric power provided to the probe to keep it at a fixed temperature can be calculated:

$$P_{RTD} = \left(\frac{t_{on}}{T}\right) \cdot \frac{(V_p)^2}{R_{RTD}}$$

Knowing the surface area $A_p$ over which this power is dissipated, the heat flux at the probe can then be calculated: $P_{RTD}/A_p$. This surface area may be inferred from calibration experiments to determine $h$ as set out above.

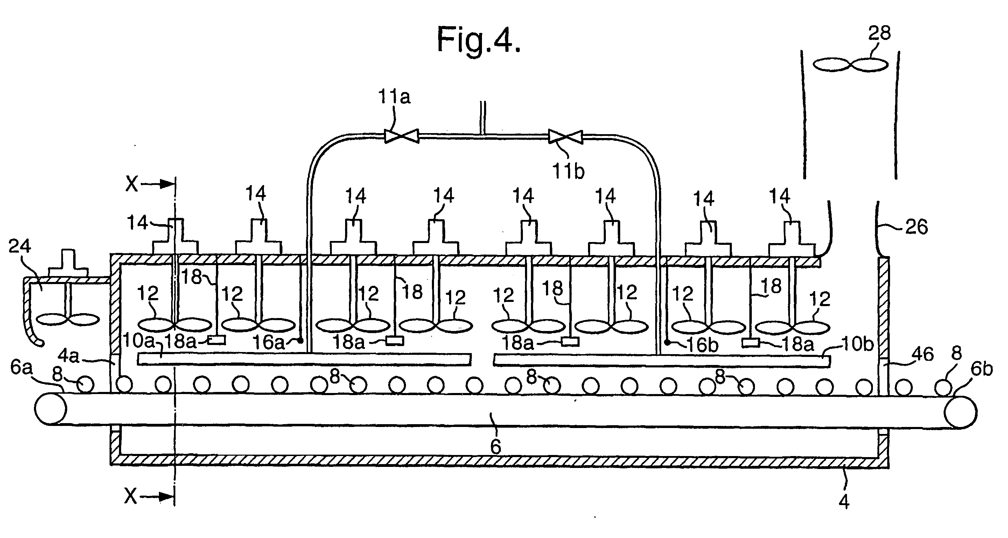

Figure 4 shows an apparatus for freezing foodstuffs in accordance with the invention, which comprises a thermally-insulated housing 4, typically made form stainless steel (for hygiene reasons). Housing 4 has inlet and outlet openings 4a, 4b through which passes an endless conveyor 6. In use, food products 8 for freezing are loaded onto the infeed end 6a of the conveyor and are then carried through the interior of the housing 4 to be discharged from the outfeed end 6b of the conveyor.

Within the housing 4 are mounted infeed and outfeed sets 10a, 10b of cryogen spray means, each comprising a number of spray bars and adapted and controlled independently to spray a cryogen (typically liquid nitrogen, but any other gas - such as carbon dioxide or liquid air - below its critical point temperature may be preferred for the freezing of certain products) inwardly and slightly away from the conveyor 6 towards fans 12. Each fan 12 is driven by an associated motor 14, arranged so as to blow downwardly toward the conveyor 6 and the foodstuffs 8 borne by it, assisting in the evaporation of the cryogen and enhancing heat transfer between cryogen and food. A thermocouple 16 is provided for sensing ambient temperature within the housing 4.

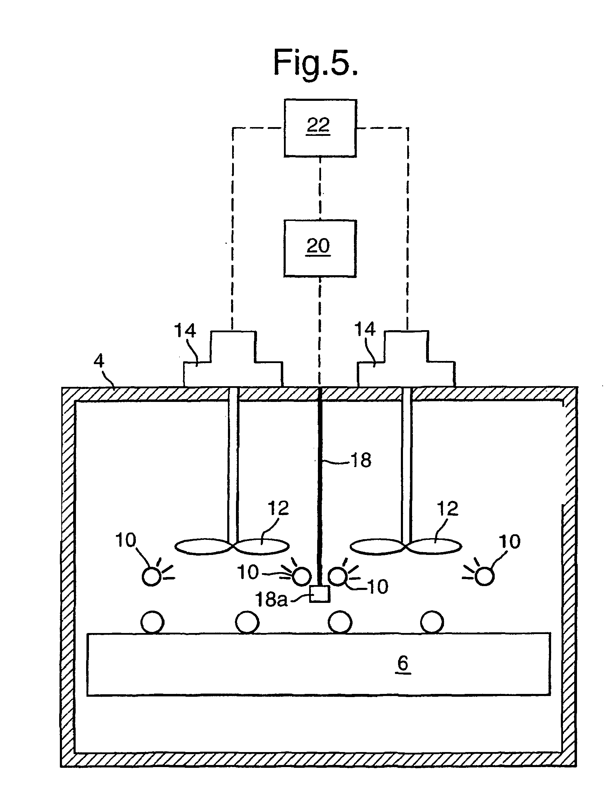

Referring now to Figure 5, it will be seen that the fans 12 are arranged in pairs transverse to the direction of movement of the conveyor 6 therebeneath. A flux probe 18 is located adjacent each pair of fans 12 in order to measure the heat flux parameter closely adjacent the surface of conveyor 6 unto which the foodstuffs 8 are carried. In practice, distal end 18a of flux probe 18 is disposed closely adjacent or in the stream of air entrained cryogen blown by fan 12 toward the foodstuffs 8 and is adapted to measure the heat flux thereat. Flux probe 18 is connected functionally (as illustrated by the broken lines in Figure 5) to a controller 20, such as a programmable logic controller, which compares the actual heat flux value at the conveyor 6 as indicated by the flux probe 18 with a predetermined heat flux parameter value, and, via frequency inverter 22, varies the speed of fans 12 in order to bring the measured heat flux parameter value into convergence with the desired value. Placement of the distal end 18a of probe 18 close to the conveyor 6 and the cryogen spray areas will enable probe 18 to indicate if liquid cryogen is impinging upon it. This is advantageous because impingement of liquid cryogen on the probe 18 would suggest that liquid cryogen may be collecting in the bottom of housing 4; this is not only an inefficient use of the cryogen, but also there may be an adverse affect on the freezing of the foodstuffs 8 if they are impacted by liquid cryogen. Also, pooling of liquid cryogen is particularly undesirable where the cryogen is a mixture of oxygen and nitrogen (i.e. liquid air); because of the difference in respective boiling point temperatures, pools of liquid air gradually become enriched in oxygen, presenting a growing risk of explosion. Ideally, cryogen is evaporated as it emerges from the spray means and before it can impinge on the foodstuffs 8.

As will be appreciated by those skilled in the art, maintenance of a substantially constant heat flux parameter value as experienced by foodstuffs 8 as they pass through the housing 4 may require frequent variation of the speed of each pair of fans 12 along the length of the housing 4. The freezing process according to the invention within the housing is, however, substantially isothermal; accordingly, only a single thermocouple 16 is required, and this is connected functionally to controller 20, which is also effective, in response to the temperature sensed by the thermocouple 16, to vary the flow rate of cryogen supplied to the sets 10a, 10b of cryogen spray means. For convenience, only a single cryogen source (not shown) is required, with supply lines (not shown) to each set 10a, 10b of cryogen spray means, valve means (not shown) responsive to signals from the controller 20 being provided in each supply line to actuate and control the flow of cryogen for discharge from the spray means. Because the thermal load within the housing 4 is greatest toward the inlet opening 4a, where the temperature difference between the cryogen and the foodstuff 8 is at its greatest, the upstream set 10a of cryogen spray means will usually discharge more cryogen than the downstream set 10b. Accordingly, although the downstream set 10b may comprise only two cryogen spray bars aligned with the direction of movement of the conve yor 6, in order to ensure a substantially constant heat flux where the thermal load is highest, the upstream set 10a may also comprise a third spray bar (not shown) parallel to those illustrated in Figure 5 and disposed between and adapted to spray cryogen outwardly towards the adjacent fans 12 in each transverse pair. In order that . foodstuffs entering the inlet opening 4a rapidly attain the desired value of heat flux parameter, a further spray bar (not shown) may also be provided, arranged transversely to the direction of conveyor movement.

In use, foodstuffs 8 are loaded on the conveyor 6 and are frozen as they pass through the housing 4 by the cryogen blown onto them by the fans 12. Warm cryogen (that is, that cryogenic gas which has been warmed through contact with the foodstuffs 8) is exhausted to atmosphere through an exhaust duct 26, drawn by a fan system 28, as is well known in the art. Exhaust duct 26 and fan system 28 are located at the downstream end of the housing 4, towards the outlet opening 4b; the arrangement of the overall cryogen flow is therefore concurrent with the direction of movement of the foodstuffs through the housing 4.

In carrying out a freezing process in accordance with the invention, the apparatus is operated as follows. According to the type of foodstuff 8 to be frozen, the programmable logic controller 20 is programmed with the time the foodstuffs should remain in the housing 4 (which is dictated by the speed of movement of conveyor 6), the heat flux parameter to be maintained substantially constant within the housing 4 (which is maintained, once all of the parts of the apparatus 2 have cooled to a working temperature, by varying the mass flow of cryogen supplied by the sets 10a, 10b of cryogen spray means according to the rate of foodstuff throughput) and the heat flux value experienced by the foodstuffs 8 at the surface of the conveyor 6 to be maintained substantially constant whilst the foodstuffs 8 pass through the housing 4 (which, as described above, is achieved by varying the speed of operation of each pair of fans 12). Foodstuffs are loaded onto the conveyor 6 in order to present a predetermined freezing "load" to the apparatus, and without layering or shielding of individual items which would adversely affect their freezing.

The apparatus described above is purely illustrative of the principles of the present invention. Thus, the size and shape of tunnel, and the number, disposition and configuration of the fans or of the jets or other means of delivering the required stream of coolant gas and of the cryogen spray means may be varied as may be appropriate for a particular range of foodstuffs. In tests with a 20 foot by 2 foot (6.1 m by 0.61 m) freezing tunnel in accordance with the invention, for example, we have found that an effective arrangement consists of eight pairs of fans arranged along the tunnel, with two sets of cryogen spraybars, each controlled by a dedicated cryogen control valve, the first, upstream set spanning the first four pairs of fans and the second, downstream set spanning the remaining four pairs of fans. Each pair of fans has an associated heat flux parameter probe, and a single thermocouple is located towards the middle of the tunnel and is effective for maintaining isothermal conditions. In order to ensure the system is as efficient as possible it is important that the gas exhausted from duct 26 is as warm as possible. This may be achieved in practice by reducing the amount of cryogen introduced near to the duct 26, the adjacent fans being made to work harder and create higher local gas velocities so as to maintain the heat flux at the desired constant value.

## Claims

1. A method of freezing material, which is tissue, an organ or a simple multicellular structure, to minimise cellular damage on thawing, which method comprises the steps of selecting the heat flux parameter with which the material is to be frozen and cooling the material with said heat flux parameter; **characterised in that**, said heat flux parameter is selected with reference to first and second latent heat temperature plateaus associated with the material and so as to minimise the difference between said plateaus, wherein the first latent heat temperature plateau is that associated with the material before the material is frozen with said heat flux parameter and the second latent heat temperature plateau is that associated with the material after the material has been frozen with said heat flux parameter and subsequently thawed.

2. A method according to any preceding claim, wherein the material is cooled by exposing it to a stream of cooling gas controlled to provide a substantially constant heat flux parameter.

3. A method according to claim 2, wherein the heat flux parameter is monitored during said freezing and the stream of cooling gas adjusted as necessary to maintain the parameter substantially constant.

4. A method according to claim 3, wherein the heat flux parameter is monitored using a sensorless temperature controller.

5. A method according to claim 3 or 4, wherein the velocity of the cooling gas is adjusted.

6. A method according to any of claims 1 to 5, wherein the material is frozen in a batch freezer or tunnel freezer.

7. A method according to claim 6, wherein a tunnel freezer is used in a co-flowing configuration.

8. The use of a method as claimed in any preceding claim for preserving the biological activity or viability of a biological material.

9. A method as claimed in claim 1, for the freezing of tissue or organs for medical or veterinary transplantation, in which method cryoprotective additives are introduced into the tissue or organ before freezing.

10. A method as claimed in claim 9, wherein vascular tissue is cooled by perfusion.

11. A method as claimed in claim 1, for freezing simple multicellular structures such as early developmental stages of insects, fish, crustacea, in which method cryoprotective additives are incorporated before the freezing.

12. A method of testing whether a sample of tissue has suffered damage attributable to being previously frozen and thawed, which method comprises freezing the sample to obtain a temperature time curve which is then compared against a freezing curve for a homogenised sample of said tissue.

## Patentansprüche

1. Verfahren zum Einfrieren von Material, bei dem es sich um Gewebe, ein Organ oder eine einfache mehrzellige Struktur handelt, um Zellschaden beim Auftauen auf ein Minimum zu verringern, wobei das Verfahren die Schritte des Auswählens des Wärmeflussparameters, mit dem das Material einzufrieren ist, und des Abkühlens des Materials mit dem Wärmeflussparameter umfasst, **dadurch gekenn-**

**zeichnet, dass** der Wärmeflussparameter unter Bezugnahme auf ein erstes und ein zweites Latentwärme-Temperaturplateau ausgewählt wird, die mit dem Material verbunden sind, um die Differenz zwischen den Plateaus auf ein Minimum zu verringern, wobei das erste Latentwärme-Temperaturplateau das ist, das mit dem Material verbunden ist, bevor das Material mit dem Wärmeflussparameter eingefroren wird, und das zweite Latentwärme-Temperaturpiateau das ist, das mit dem Material verbunden ist, nachdem das Material mit dem Wärmeflussparameter eingefroren und anschließend aufgetaut worden ist.

2. Verfahren nach einem der vorangehenden Ansprüche, wobei das Material abgekühlt wird, indem es einem Strom abkühlenden Gases ausgesetzt wird, der so gesteuert wird, dass ein im Wesentlichen konstanter Wärmeflussparameter vorhanden ist.

3. Verfahren nach Anspruch 2, wobei der Wärmeflussparameter während des Einfrierens überwacht wird und der Strom abkühlenden Gases so reguliert wird, wie dies erforderlich ist, um den Parameter im Wesentlichen konstant zu halten.

4. Verfahren nach Anspruch 3, wobei der Wärmeflussparameter unter Verwendung einer sensorlosen Temperaturkontrolleinrichtung überwacht wird.

5. Verfahren nach Anspruch 3 oder 4, wobei die Geschwindigkeit des abkühlenden Gases reguliert wird.

6. Verfahren nach einem der Ansprüche 1 bis 5, wobei das Material in einer Chargen-Gefriereinrichtung oder einer Tunnel-Gefriereinrichtung eingefroren wird.

7. Verfahren nach Anspruch 6, wobei eine Tunnel-Gefriereinrichtung in einer Gleichstromkonfiguration eingesetzt wird.

8. Einsatz eines Verfahrens nach einem der vorangehenden Ansprüche zum Bewahren der biologischen Aktivität bzw. Lebensfähigkeit eines biologischen Materials.

9. Verfahren nach Anspruch 1 zum Einfrieren von Gewebe oder Organen für medizinische oder veterinäre Transplantation, wobei vor dem Einfrieren kryoprotektive Zusätze in das Gewebe oder Organ eingeleitet werden.

10. Verfahren nach Anspruch 9, wobei vaskuläres Gewebe durch Pertusion abgekühlt wird.

11. Verfahren nach Anspruch 1 zum Einfrieren einfacher mehrlelliger Strukturen, wie beispielsweise früher Entwicklungsstufen von Insekten, Fischen, Krustentieren, wobei bei dem Verfahren vor dem Einfrieren kryoprotektive Zusätze integriert werden.

12. Verfahren zum Prüfen, ob eine Gewebeprobe Schaden genommen hat, der darauf zurückzuführen ist, dass sie zuvor eingefroren und aufgetaut worden ist, wobei das Verfahren das Einfrieren der Probe zum Ermitteln einer Temperatur-Zeit-Kurve umfasst, die dann mit einer Einfrier-Kurve für eine homogenisierte Probe des Gewebes verglichen wird.

**Revendications**

1. Procédé de congélation d'un matériel, qui peut être un tissu, un organe ou une structure multicellulaire simple, afin de réduire au minimum les dommages subis par les cellules au moment de la décongélation, lequel procédé comprend les étapes de sélection du paramètre de flux de chaleur avec lequel le matériel doit être congelé, et le refroidissement du matériel avec ledit paramètre de flux de chaleur, **caractérisé en ce que** ledit paramètre de flux de chaleur est choisi en faisant référence aux premier et second plateaux de température de chaleur latente associés au matériel, et de façon à réduire au minimum la différence entre lesdits plateaux, dans lequel le premier plateau de température de chaleur latente est celui qui est associé avec le matériel avant que le matériel soit congelé avec ledit paramètre de flux de chaleur, et le second plateau de température de chaleur latente est celui qui est associé avec le matériel après que le matériel a été congelé avec ledit paramètre de flux de chaleur, puis décongelé.

2. Procédé selon l'une quelconque des revendications précédentes, dans lequel le matériel est refroidi par exposition à un courant de gaz de refroidissement commandé pour fournir un paramètre de flux de chaleur sensiblement constant.

3. Procédé selon la revendication 2, dans lequel le paramètre de flux de chaleur est surveillé au cours de ladite congélation et le courant de gaz de refroidissement est réglé selon les besoins pour maintenir le paramètre sensiblement constant.

4. Procédé selon la revendication 3, dans lequel le paramètre de flux de chaleur est surveillé en utilisant un dispositif de commande de la température sans capteur.

5. Procédé selon la revendication 3 ou 4, dans lequel la vitesse du gaz de refroidissement est réglée.

**6.** Procédé selon l'une quelconque des revendications 1 à 5, dans lequel le matériel est congelé dans un congélateur discontinu ou un tunnel de congélation.

**7.** Procédé selon la revendication 6, dans lequel un tunnel de décongélation est utilisé dans une configuration d'écoulement simultané.

**8.** Utilisation d'un procédé selon l'une quelconque des revendications précédentes, afin de préserver l'activité biologique ou la viabilité d'un matériel biologique.

**9.** Procédé selon la revendication 1, pour la congélation de tissu ou d'organes aux fins d'une transplantation médicale ou vétérinaire, dans lequel procédé des additifs cryoprotecteurs sont introduits dans le tissu ou l'organe avant sa congélation.

**10.** Procédé selon la revendication 9, dans lequel le tissu vasculaire est refroidi par perfusion.

**11.** Procédé selon la revendication 1, pour la congélation de structures multicellulaires simples telles que les stades de développement précoces des insectes, des poissons, des crustacés, dans lequel procédé des additifs cryoprotecteurs sont intégrés avant la congélation.

**12.** Procédé d'essai permettant de vérifier si un échantillon de tissu a subi des dommages qui peuvent être attribués à une congélation et à une décongélation préalables, lequel procédé comprend la congélation de l'échantillon afin d'obtenir une courbe temps - température qui est ensuite comparée à une courbe de congélation pour un échantillon homogénéisé dudit tissu.

# Fig.1.

# Fig.2.

# Fig.3.

# Fig.4.

EP 1 286 586 B1

# Fig.5.

Fig.6.

EP 1 286 586 B1